# EUROPEAN PATENT SPECIFICATION

(11) **EP 3 372 570 B1**
(45) Date of publication and mention of the grant of the patent: **25.02.2026**
(21) Application number: 16862219.9
(22) Date of filing: 04.11.2016
(51) Int. Cl.: C03C 27/12, B32B 17/10, B32B 27/30, G02B 27/01

(54) **INTERLAYER FOR LAMINATED GLASS AND LAMINATED GLASS**
ZWISCHENSCHICHT FÜR VERBUNDGLAS SOWIE VERBUNDGLAS
COUCHE INTERMÉDIAIRE POUR VERRE FEUILLETÉ ET VERRE FEUILLETÉ

(30) Priority: 05.11.2015 JP 2015217779
(43) Date of publication of application: 12.09.2018
(73) Proprietor: Sekisui Chemical Co., Ltd., Osaka-shi, Osaka 530-8565 (JP)
(72) Inventor: OOTA, Yuusuke, Kouka-shi Shiga 528-8585 (JP); TSUNODA, Ryuta, Kouka-shi Shiga 528-8585 (JP); NISHINO, Hiromitsu, Kouka-shi Shiga 528-8585 (JP)
(74) Representative: Ter Meer Steinmeister & Partner
(86) International application number: PCT/JP2016/082862
(87) International publication number: WO 2017/078160

(56) References cited:
- EP-A1- 3 251 836
- EP-A1- 3 357 888
- EP-A1- 3 357 891
- EP-A1- 3 357 892
- EP-A1- 3 357 893
- WO-A1-2011/052311
- WO-A1-2015/086233
- WO-A1-2016/017566
- DE-A1- 102013 012 648
- JP-A- 2007 223 883
- JP-A- 2009 035 444
- JP-A- 2014 024 752
- US-A- 5 812 332
- US-A1- 2010 314 900
- US-A1- 2011 189 426
- US-A1- 2016 159 041

## Description

### TECHNICAL FIELD

The present invention relates to an interlayer film for laminated glass. Moreover, the present invention relates to laminated glass prepared with the interlayer film for laminated glass.

### BACKGROUND ART

Since laminated glass generally generates only a small amount of scattering glass fragments even when subjected to external impact and broken, laminated glass is excellent in safety. As such, the laminated glass is widely used for automobiles, railway vehicles, aircraft, ships, buildings, and the like. The laminated glass is produced by sandwiching an interlayer film for laminated glass between a pair of glass plates.

Moreover, as the laminated glass used for automobiles, a head-up display (HUD) has been known. In the HUD, on the windshield of an automobile, measured information such as the speed which is traveling data of the automobile and the like can be displayed.

In the HUD, there is a problem that the measured information displayed on the windshield is doubly observed.

In order to suppress double images, a wedge-shaped interlayer film has been used. The following Patent Document 1 discloses a sheet of laminated glass in which a wedge-shaped interlayer film having a prescribed wedge angle is sandwiched between a pair of glass plates. In such a sheet of laminated glass, by the adjustment of the wedge angle of the interlayer film, a display of measured information reflected by one glass plate and a display of measured information reflected by the other glass plate can be focused into one point to make an image in the visual field of a driver. As such, the display of measured information is hard to be observed doubly and the visibility of a driver is hard to be hindered.

Moreover, the following Patent Document 2 discloses laminated glass being provided with an outer surface and an inner surface and having one or more regions where the outer surface and the inner surface form a wedge angle with each other in order to prevent or reduce interfering double images. In this laminated glass, the outer surface and the inner surface have continuously changing wedge angles. In this laminated glass, the wedge angles at the respective positions depend on an incident angle of a local light beam and a local radius of curvature of the laminated glass.

Patent Document 3 relates to a thermoplastic film for a laminated-glass pane having a non-linear continuous wedge insert in the vertical and horizontal direction in some sections. In the vertical direction, the laminated-glass pane is further from an observer at a lower end than at an upper end from the perspective of the observer. In a laminated-glass pane equipped with the thermoplastic film, the thermoplastic film is located between two glass layers. The thermoplastic film has at least a first section having a wedge angle profile that is continuous and non-linear in the vertical and horizontal direction.

### Related Art Documents

### Patent Documents

Patent Document 1: JP H4-502525 T
Patent Document 2: WO 2009/071135 A1
Patent Document 3: WO 2015/086233 A1

### SUMMARY OF THE INVENTION

### PROBLEMS TO BE SOLVED BY THE INVENTION

At a certain position of laminated glass prepared with a conventional interlayer film, since the sectional shape in the thickness direction is a wedge-like shape, double images can be improved. However, in the HUD, when a driver moves his or her line of sight from the lower end of a display area to the upper end thereof, his or her gaze direction is caused to vary by the amount of an angle formed by the direction to an image projected onto a lower end-side display area of the HUD and the direction to an image projected onto an upper end-side display area thereof. As such, there has hitherto been a problem that simultaneously improving double images that occur on a lower end side of the display area of the HUD and double images that occur on an upper end side thereof is difficult.

Particularly in recent years, enlargement of a display area of the HUD has been desired, and notably, the above-mentioned problems have occurred.

An object of the present invention is to provide an interlayer film for laminated glass with which double images can be effectively suppressed. Moreover, the present invention is also aimed at providing laminated glass prepared with the above-mentioned interlayer film for laminated glass.

### MEANS FOR SOLVING THE PROBLEMS

According to a broad aspect of the present invention, there is provided an interlayer film for laminated glass with the features of independent claim 1.

Amongst others, the interlayer film for laminated glass according to the present invention comprises a thermoplastic resin and a plasticizer, has one end and the other end thicker in thickness than the one end, and has (1) a region where the thickness is made to increase in a direction from one end side to the other end side and having a portion where the amount of increase in the thickness is increased in the direction from one end side to the other end side in the region where the thickness is made to increase, and (2) has a region where the sectional shape in the thickness direction is a wedge-like shape and having a portion where the wedge angle is increased in a direction from one end side to the other end side in the region where the sectional shape in the thickness direction is a wedge-like shape.

Furthermore, in the interlayer film for laminated glass according to the present invention, when a distance between the one end and the other end of the interlayer film is defined as X, the interlayer film has a portion where the amount of increase in the thickness in an overall first region extending over a distance range of 0.1X where the thickness is made to increase is larger than the amount of increase in the thickness in an overall second region extending over a distance range of 0.1X, being located closer to the one end side than the first region and connected to the first region, where the thickness is made to increase, and the second region and the first region are connected in this order in the direction from one end side to the other end side.

In the interlayer film for laminated glass according to the present invention, in the whole interlayer film, the amount of increase in the thickness is increased in the direction from one end side to the other end side.

In a specific aspect of the interlayer film for laminated glass according to the present invention, a ratio of the amount of increase in the thickness in the overall first region to the amount of increase in the thickness in the overall second region is 1.02 or more and is 1.25 or less.

The interlayer film for laminated glass according to the present invention further has a portion where the amount of increase in the thickness in an overall third region extending over a distance range of 0.1X where the thickness is made to increase is larger than the amount of increase in the thickness in the overall first region extending over a distance range of 0.1X, being located closer to the one end side than the third region and connected to the third region, where the thickness is made to increase, and the second region, the first region, and the third region are connected in this order in the direction from one end side to the other end side.

Moreover, in the interlayer film for laminated glass according to the present invention, the absolute value of a difference between the ratio of the amount of increase in the thickness in the overall first region to the amount of increase in the thickness in the overall second region and the ratio of the amount of increase in the thickness in the overall third region to the amount of increase in the thickness in the overall first region is 0.2 or less.

In the interlayer film for laminated glass according to the present invention, in the whole interlayer film, the wedge angle is increased in the direction from one end side to the other end side.

Furthermore, in the interlayer film for laminated glass according to the present invention, when a distance between the one end and the other end of the interlayer film is defined as X, the interlayer film has a portion where the wedge angle in an overall first region extending over a distance range of 0.1X where the thickness is made to increase is larger than the wedge angle in an overall second region extending over a distance range of 0.1X, being located closer to the one end side than the first region and connected to the first region, where the thickness is made to increase, and the second region and the first region are connected in this order in the direction from one end side to the other end side.

In a specific aspect of the interlayer film for laminated glass according to the present invention, a ratio of the wedge angle in the overall first region to the wedge angle in the overall second region is 1.02 or more and is 1.25 or less.

The interlayer film for laminated glass according to the present invention further has a portion where the wedge angle in an overall third region extending over a distance range of 0.1X where the thickness is made to increase is larger than the wedge angle in the overall first region extending over a distance range of 0.1X, being located closer to the one end side than the third region and connected to the third region, where the thickness is made to increase, and the second region, the first region, and the third region are connected in this order in the direction from one end side to the other end side.

Also in the interlayer film for laminated glass according to the present invention, the absolute value of a difference between the ratio of the wedge angle in the overall first region to the wedge angle in the overall second region and the ratio of the wedge angle in the overall third region to the wedge angle in the overall first region is 0.2 or less.

It is preferred that the thermoplastic resin, which is contained in the interlayer film, is a polyvinyl acetal resin. Furthermore, the interlayer film contains a plasticizer.

In a specific aspect of the interlayer film for laminated glass according to the present invention, the interlayer film is provided with a first layer and a second layer arranged on a first surface side of the first layer.

In a specific aspect of the interlayer film for laminated glass according to the present invention, the interlayer film is provided with a third layer arranged on a second surface side opposite to the first surface side of the first layer.

According to a broad aspect of the present invention, there is provided laminated glass including a first lamination glass member, a first lamination glass member, a second lamination glass member, and the above-described interlayer film for laminated glass, the interlayer film for laminated glass being arranged between the first lamination glass member and the second lamination glass member.

In a specific aspect of the laminated glass according to the present invention, the first and second lamination glass members have a flat plate-like shape or have a curvature radius of 15000 mm or less.

### EFFECT OF THE INVENTION

Since the interlayer film for laminated glass according to the present invention has one end and the other end thicker in thickness than the one end, and has a region where the thickness is made to increase in a direction from one end side to the other end side and has a portion where the amount of increase in the thickness is increased in the direction from one end side to the other end side in the region where the thickness is made to increase, and has a region where the sectional shape in the thickness direction is a wedge-like shape and has a portion where the wedge angle is increased in a direction from one end side to the other end side in the region where the sectional shape in the thickness direction is a wedge-like shape, double images can be effectively suppressed.

### BRIEF DESCRIPTION OF DRAWINGS

[Fig. 1] Fig. 1 is a sectional view schematically showing an interlayer film for laminated glass in accordance with a first embodiment of the present invention.
[Fig. 2] Fig. 2 is a sectional view schematically showing an interlayer film for laminated glass in accordance with a second embodiment of the present invention.
[Fig. 3] Fig. 3 is a sectional view showing the first modified example of a sectional shape in the thickness direction of an interlayer film for laminated glass.
[Fig. 4] Fig. 4 is a sectional view showing the second modified example of a sectional shape in the thickness direction of an interlayer film for laminated glass.
[Fig. 5] Fig. 5 is a sectional view showing the third modified example of a sectional shape in the thickness direction of an interlayer film for laminated glass.
[Fig. 6] Fig. 6 is a sectional view showing the fourth modified example of a sectional shape in the thickness direction of an interlayer film for laminated glass.
[Fig. 7] Fig. 7 is a sectional view showing the fifth modified example of a sectional shape in the thickness direction of an interlayer film for laminated glass (not according to the invention).
[Fig. 8] Fig. 8 is a sectional view showing the sixth modified example of a sectional shape in the thickness direction of an interlayer film for laminated glass (not according to the invention).
[Fig. 9] Fig. 9 is a sectional view showing an example of laminated glass prepared with the interlayer film for laminated glass shown in Fig. 1.
[Fig. 10] Fig. 10 is a schematic view for illustrating a portion where the amount of increase in the thickness is increased in the interlayer film for laminated glass according to the present invention.
[Fig. 11] Fig. 11 is a schematic view for illustrating a portion where the wedge angle is increased in the interlayer film for laminated glass according to the present invention.
[Fig. 12] Fig. 12 is a sectional view showing the first example of an interlayer film for laminated glass which is not categorized as the interlayer film for laminated glass according to the present invention.
[Fig. 13] Fig. 13 is a sectional view showing the second example of an interlayer film for laminated glass which is not categorized as the interlayer film for laminated glass according to the present invention.

### MODE(S) FOR CARRYING OUT THE INVENTION

Hereinafter, the details of the present invention will be described.

The interlayer film for laminated glass according to the present invention (in the present specification, sometimes abbreviated as "the interlayer film") has one end and the other end thicker in thickness than the one end. The interlayer film according to the present invention (Constitution (1)) has a region where the thickness is made to increase in a direction from one end side to the other end side and has a portion where the amount of increase in the thickness is increased in the direction from one end side to the other end side in the region where the thickness is made to increase, and (Constitution (2)) has a region where the sectional shape in the thickness direction is a wedge-like shape and has a portion where the wedge angle is increased in a direction from one end side to the other end side in the region where the sectional shape in the thickness direction is a wedge-like shape.

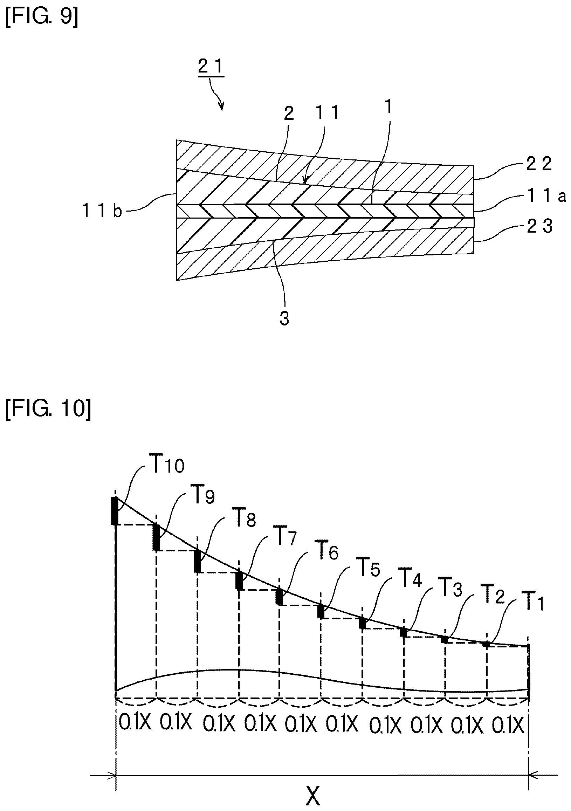

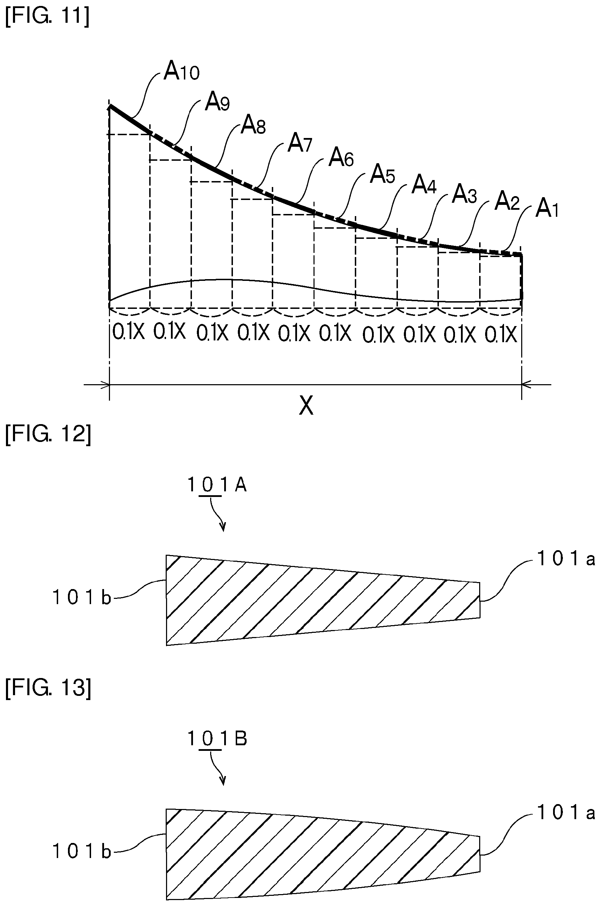

In this connection, "a portion where the amount of increase in the thickness is increased" expresses a meaning different from "a portion where the thickness is made to increase", and in the present invention, the relationship of the degree of "thickness increase" is controlled to a specific relationship, not simply whether the thickness is made to increase or not. Moreover, "a portion where the wedge angle is increased" expresses a meaning different from "a portion where there is a wedge angle", and in the present invention, the relationship of the degree of "the wedge angle" is controlled to a specific relationship, not simply whether there is a wedge angle or not. For example, as schematically shown in Fig. 10, the interlayer film has a portion where the amount of increase in the thickness Tₙ is larger than the amount of increase in thickness Tₙ₁ (n represents an integer of 2 to 10). In this connection, at least one integer represented as n (preferably two or more integers) among integers of 2 to 10 falls under this case to make the amount of increase in the thickness Tₙ larger than the amount of increase in thickness Iₙ₋₁. For example, as schematically shown in Fig. 11, the interlayer film has a portion where the wedge angle determined from a surface inclination angle Aₙ is larger than the wedge angle determined from a surface inclination angle Aₙ₋₁ (n represents an integer of 2 to 10, and in Fig. 11, A1 to A10 each represent a straight line segment in the case of assuming that the surface of an interlayer film portion extending between both ends apart from each other by a distance of 0.1X is a flat surface, and the wedge angle is determined from inclinations of two surfaces respectively at both sides instead of being determined from only an inclination of a surface at one side shown in Fig. 11).

Since the interlayer film according to the present invention is provided with the above-described configuration, double images can be effectively suppressed. Particularly in the present invention, when laminated glass prepared with the interlayer film is used for a head-up display (HUD), even if measured information such as the speed which is traveling data of an automobile or the like is displayed on the display, it is possible to effectively suppress the measured information from being doubly observed. In particular, at both ends (both of the lower end and the upper end) of a display area of the HUD, double images can be effectively suppressed. Also, at a region between both ends of a display area of the HUD, double images can be effectively suppressed.

In the foregoing Constitution (1) and the foregoing Constitution (2), the amount of increase in the thickness or the wedge angle per unit distance is increased in a direction from one end side to the other end side of the interlayer film. A distance between one end and the other end of the interlayer film is defined as X. From the viewpoint of further suppressing double images at both ends of a display area of the HUD, the interlayer film has a portion where the amount of increase in the thickness in an overall first region extending over a distance range of 0.1X where the thickness is made to increase is larger than
the amount of increase in the thickness in an overall second region extending over a distance range of 0.1X, being located closer to the one end side than the first region and connected to the first region, where the thickness is made to increase. The total region of the first region and the second region is a region extending over a distance range of 0.2X. The first region is arranged at an arbitrary position between a position at a distance of 0.1X from one end of the interlayer film and a position at a distance of 1X therefrom (within a region ranging from 0.1X to 1X) and is a region extending over a distance range of 0.1X within a range from a position at a distance of 0.1X from one end of the interlayer film to a position at a distance of 1X therefrom. The second region is arranged at an arbitrary position between a position at a distance of 0X from one end of the interlayer film and a position at a distance of 0.9X therefrom (within a region ranging from 0X to 0.9X) and is a region extending over a distance range of 0.1X within a range from a position at a distance of 0X from one end of the interlayer film to a position at a distance of 0.9X therefrom. A region defined by summing up the first region and the second region is arranged at an arbitrary position between a position at a distance of 0X from one end of the interlayer film and a position at a distance of 1X therefrom (within a region ranging from 0X to 1X) and is a region extending over a distance range of 0.2X within a range from a position at a distance of 0X from one end of the interlayer film to a position at a distance of 1X therefrom.

From the viewpoint of further suppressing double images at both ends of a display area of the HUD, the interlayer film has a portion where the amount of increase in the thickness in an overall first region extending over a distance range of 0.1X where the thickness is made to increase is larger than the amount of increase in the thickness in an overall second region extending over a distance range of 0.1X, being located closer to the one end side than the first region and connected to the first region, where the thickness is made to increase and have a portion where the amount of increase in the thickness in an overall third region extending over a distance range of 0.1X where the thickness is made to increase is larger than the amount of increase in the thickness in the overall first region extending over a distance range of 0.1X, being located closer to the one end side than the third region and connected to the third region, where the thickness is made to increase. It is preferred that the three regions continuously arranged satisfy these relationships. According to the invention, the second region, the first region, and the third region are connected in this order in the direction from one end side to the other end side. The first region, the second region, and the third region are regions continuously arranged in a direction connecting one end and the other end of the interlayer film. The total region of the first region, the second region, and the third region is a region extending over a distance range of 0.3X. The first region is arranged at an arbitrary position between a position at a distance of 0.1X from one end of the interlayer film and a position at a distance of 0.9X therefrom (within a region ranging from 0.1X to 0.9X) and is a region extending over a distance range of 0.1X within a range from a position at a distance of 0.1X from one end of the interlayer film to a position at a distance of 0.9X therefrom. The second region is arranged at an arbitrary position between a position at a distance of 0X from one end of the interlayer film and a position at a distance of 0.8X therefrom (within a region ranging from 0X to 0.8X) and is a region extending over a distance range of 0.1X within a range from a position at a distance of 0X from one end of the interlayer film to a position at a distance of 0.8X therefrom. The third region is arranged at an arbitrary position between a position at a distance of 0.2X from one end of the interlayer film and a position at a distance of 1X therefrom (within a region ranging from 0.2X to 1X) and is a region extending over a distance range of 0.1X within a range from a position at a distance of 0.2X from one end of the interlayer film to a position at a distance of 1X therefrom. A region defined by summing up the first region, the second region, and the third region is arranged at an arbitrary position between a position at a distance of 0X from one end of the interlayer film and a position at a distance of 1X therefrom (within a region ranging from 0X to 1X) and is a region extending over a distance range of 0.3X within a range from a position at a distance of 0X from one end of the interlayer film to a position at a distance of 1X therefrom.

In this connection, at least one portion of the interlayer film needs only to be a portion satisfying the relationship between the first region and the second region, and the first region and the second region are arbitrarily positioned in the interlayer film. For example, when a region, being a region between a position at a distance of 0.4X from the one end and a position at a distance of 0.5X therefrom (a region ranging from 0.4X to 0.5X), extending over a distance range of 0.1X where the thickness is made to increase is defined as a first region, a region, being a region between a position at a distance of 0.3X from the one end and a position at a distance of 0.4X therefrom (a region ranging from 0.3X to 0.4X), extending over a distance range of 0.1X where the thickness is made to increase is positioned as a second region. In this case, a region, being a region between a position at a distance of 0.5X from the one end and a position at a distance of 0.6X therefrom (a region ranging from 0.5X to 0.6X), extending over a distance range of 0.1X where the thickness is made to increase is positioned as a third region. By setting a portion satisfying the relationship between the first region and the second region to a display area of the HUD, double images can be effectively suppressed. By setting a portion satisfying the relationship among the first region, the second region, and the third region to a display area of the HUD, double images can be further effectively suppressed.

From the viewpoint of further suppressing double images at both ends of a display area of the HUD, a ratio (A1/A2) of the amount (A1) of increase in the thickness in the overall first region to the amount (A2) of increase in the thickness in the overall second region is preferably 1.02 or more and more preferably 1.10 or more and is preferably 1.25 or less and more preferably 1.18 or less. From the viewpoint of further suppressing double images at both ends of a display area of the HUD, a ratio (A3/A1) of the amount (A3) of increase in the thickness in the overall third region to the amount (A1) of increase in the thickness in the overall first region is preferably 1.02 or more and more preferably 1.10 or more and is preferably 1.25 or less and more preferably 1.18 or less.

From the viewpoint of further suppressing double images at both ends of a display area of the HUD, it is preferred that, with regard to regions continuously arranged in the direction from one end side to the other end side, it is preferred that a ratio of the amount of increase in the thickness between two regions adjacent to each other be uniform. For example, in Fig. 10, it is preferred that nine ratios of Amount of increase in thickness Tₙ/Amount of increase in thickness Tₙ₋₁ (n represents an integer of 2 to 10) be uniform. From the viewpoint of further suppressing double images at both ends of a display area of the HUD, the absolute value of a difference between the ratio (A1/A2) of the amount (A1) of increase in the thickness in the overall first region to the amount (A2) of increase in the thickness in the overall second region and the ratio (A3/A1) of the amount (A3) of increase in the thickness in the overall third region to the amount (A1) of increase in the thickness in the overall first region is 0.2 or less, preferably 0.15 or less, further preferably 0.1 or less, and especially preferably 0.05 or less.

From the viewpoint of further suppressing double images at both ends of a display area of the HUD, the interlayer film has a portion where the wedge angle in an overall first region extending over a distance range of 0.1X where the thickness is made to increase is larger than the wedge angle in an overall second region extending over a distance range of 0.1X, being located closer to the one end side than the first region and connected to the first region, where the thickness is made to increase. From the viewpoint of further suppressing double images at both ends of a display area of the HUD, the interlayer film has a portion where the wedge angle in an overall first region extending over a distance range of 0.1X where the thickness is made to increase is larger than the wedge angle in an overall second region extending over a distance range of 0.1X, being located closer to the one end side than the first region and connected to the first region, where the thickness is made to increase and have a portion where the wedge angle in an overall third region extending over a distance range of 0.1X where the thickness is made to increase is larger than the wedge angle in the overall first region extending over a distance range of 0.1X, being located closer to the one end side than the third region and connected to the third region, where the thickness is made to increase. According to the invention, the second region, the first region, and the third region are connected in this order in the direction from one end side to the other end side.

From the viewpoint of further suppressing double images at both ends of a display area of the HUD, a ratio (B1/B2) of the wedge angle (B1) in the overall first region to the wedge angle (B2) in the overall second region is preferably 1.02 or more and more preferably 1.10 or more and is preferably 1.25 or less and more preferably 1.18 or less. From the viewpoint of further suppressing double images at both ends of a display area of the HUD, a ratio (B3/B1) of the wedge angle (B3) in the overall third region to the wedge angle (B1) in the overall first region is preferably 1.02 or more and more preferably 1.10 or more and is preferably 1.25 or less and more preferably 1.18 or less.

From the viewpoint of further suppressing double images at both ends of a display area of the HUD, it is preferred that, with regard to regions continuously arranged in the direction from one end side to the other end side, it is preferred that the wedge angle ratio of two regions adjacent to each other be uniform. For example, in Fig. 11, it is preferred that nine ratios of Wedge angle determined from surface inclination angle Aₙ/Wedge angle determined from surface inclination angle Aₙ₋₁ (n represents an integer of 2 to 10) be uniform. From the viewpoint of further suppressing double images at both ends of a display area of the HUD, the absolute value of a difference between the ratio (B1/B2) of the wedge angle (B1) in the overall first region to the wedge angle (B2) in the overall second region and the ratio (B3/B1) of the wedge angle (B3) in the overall third region to the wedge angle (B1) in the overall first region is 0.2 or less, more preferably 0.15 or less, further preferably 0.1 or less, and especially preferably 0.05 or less.

In this connection, the interlayer film has a first surface and a second surface respectively at both sides in the thickness direction.

From the viewpoint of effectively suppressing double images, in at least one region among ten regions of a region between a position at a distance of 0X and a position at a distance of 0.1X (a region ranging from 0 to 0.1X), a region between a position at a distance of 0.1X and a position at a distance of 0.2X (a region ranging from 0.1X to 0.2X), a region between a position at a distance of 0.2X and a position at a distance of 0.3X (a region ranging from 0.2X to 0.3X), a region between a position at a distance of 0.3X and a position at a distance of 0.4X (a region ranging from 0.3X to 0.4X), a region between a position at a distance of 0.4X and a position at a distance of 0.5X (a region ranging from 0.4X to 0.5X), a region between a position at a distance of 0.5X and a position at a distance of 0.6X (a region ranging from 0.5X to 0.6X), a region between a position at a distance of 0.6X and a position at a distance of 0.7X (a region ranging from 0.6X to 0.7X), a region between a position at a distance of 0.7X and a position at a distance of 0.8X (a region ranging from 0.7X to 0.8X), a region between a position at a distance of 0.8X and a position at a distance of 0.9X (a region ranging from 0.8X to 0.9X), and a region between a position at a distance of 0.9X and a position at a distance of 1X (a region ranging from 0.9X to 1X), it is preferred that the amount of increase in the thickness be 0.01 µm or more, it is preferred that the amount thereof be 0.02 µm or more, it is preferred that the amount thereof be 0.03 µm or more, and it is preferred that the amount thereof be 0.05 µm or more. Among ten values of the amount of increase in the thickness in the region ranging from 0X to 0.1X, the region ranging from 0.1X to 0.2X, the region ranging from 0.2X to 0.3X, the region ranging from 0.3X to 0.4X, the region ranging from 0.4X to 0.5X, the region ranging from 0.5X to 0.6X, the region ranging from 0.6X to 0.7X, the region ranging from 0.7X to 0.8X, the region ranging from 0.8X to 0.9X, and the region ranging from 0.9X to 1X, the largest value of the amount of increase in the thickness may be 100 µm or less, may be 50 µm or less, may be 10 µm or less, and may be 1 µm or less.

Hereinafter, specific embodiments of the present invention will be described with reference to the drawings.

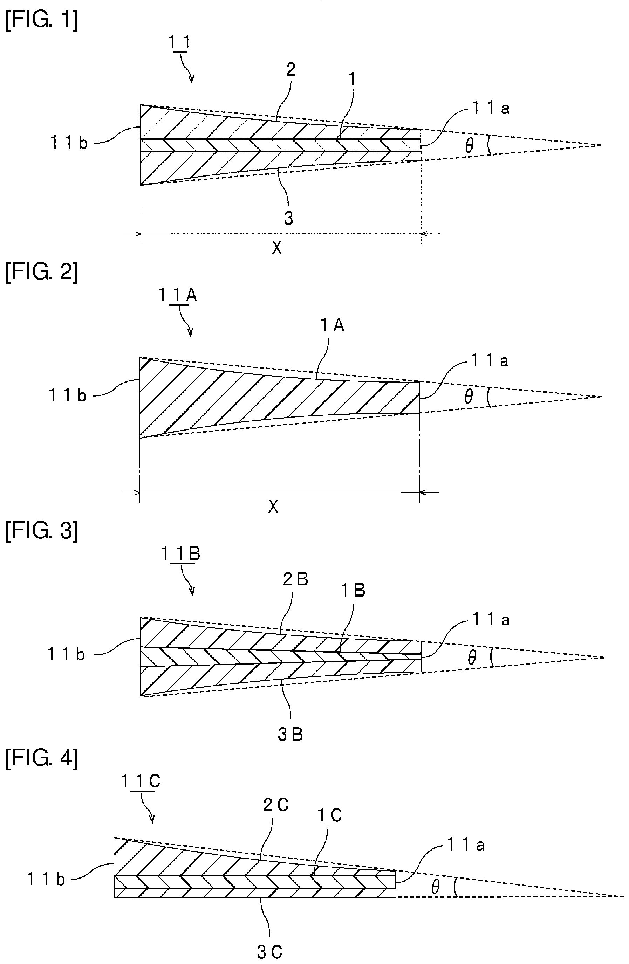

Fig. 1 is a sectional view schematically showing an interlayer film for laminated glass in accordance with a first embodiment of the present invention.

In Fig. 1, a section in the thickness direction of an interlayer film 11 is shown. In this connection, in Fig. 1 and a figure described below, for convenience of illustration, the thicknesses of an interlayer film and respective layers constituting the interlayer film and the wedge angle θ are shown so as to be different from actual thicknesses thereof and an actual wedge angle.

The interlayer film 11 is provided with a first layer 1 (intermediate layer), a second layer 2 (surface layer), and a third layer 3 (surface layer). The second layer 2 is arranged on a first surface side of the first layer 1 to be layered thereon. The third layer 3 is arranged on a second surface side opposite to the first surface of the first layer 1 to be layered thereon. The first layer 1 is arranged between the second layer 2 and the third layer 3 to be sandwiched therebetween. The interlayer film 11 is used for obtaining laminated glass. The interlayer film 11 is an interlayer film for laminated glass. The interlayer film 11 is a multilayer interlayer film.

The interlayer film 11 has one end 11a and the other end 11b at the opposite side of the one end 11a. The one end 1a and the other end 11b are end parts of both sides facing each other. The sectional shape in the thickness direction of each of the second layer 2 and the third layer 3 is a wedge-like shape. The sectional shape in the thickness direction of the first layer 1 is a rectangular shape. The thickness of the one end 11a side of each of the second layer 2 and the third layer 3 is thinner than that of the other end 11b side thereof. Accordingly, the thickness of the one end 11a of the interlayer film 11 is thinner than the thickness of the other end 11b thereof. Accordingly, the interlayer film 11 has a region being thin in thickness and a region being thick in thickness.

Moreover, the whole interlayer film 11 has a region where the thickness is made to increase. Furthermore, the interlayer film 11 has a region where the thickness is made to increase in a direction from one end 11a side to the other end 11b side and has a portion where the amount of increase in the thickness is increased in the direction from one end 11a side to the other end 11b side in the region where the thickness is made to increase. Specifically, in the interlayer film 11, in the whole interlayer film 11, the amount of increase in the thickness is increased in the direction from one end 11a side to the other end 11b side. Moreover, the interlayer film 11 has a region where the sectional shape in the thickness direction is a wedge-like shape and has a portion where the wedge angle θ' is increased in a direction from one end 11a side to the other end 11b side in the region where the sectional shape in the thickness direction is a wedge-like shape. Specifically, in the interlayer film 11, in the whole interlayer film 11, the wedge angle θ' is increased in the direction from one end 11a side to the other end 11b side. For example, the wedge angle can be calculated as a wedge angle in the case of assuming that the surface of an interlayer film portion extending between both ends apart from each other by a distance of 0.1X is a flat surface. In this connection, the wedge angle θ shown in Fig. 1 is a wedge angle in an overall region where the sectional shape in the thickness direction of the interlayer film 11 is a wedge-like shape.

Fig. 2 is a sectional view schematically showing an interlayer film for laminated glass in accordance with a second embodiment of the present invention. In Fig. 2, a section in the thickness direction of an interlayer film 11A is shown.

The interlayer film 11A shown in Fig. 2 is provided with a first layer 1A. The interlayer film 11A has a onelayer structure composed only of the first layer 1A and is a single-layered interlayer film. The interlayer film 11A is singly constituted by the first layer 1A. The interlayer film 11A is used for obtaining laminated glass. The interlayer film 11A is an interlayer film for laminated glass.

The sectional shape in the thickness direction of the first layer 1A corresponding to the interlayer film 11A is a wedge-like shape. The interlayer film 11A has one end 11a and the other end 11b at the opposite side of the one end 11a. The one end 11a and the other end 11b are end parts of both sides facing each other. The thickness of the one end 11a of the interlayer film 11A is thinner than the thickness of the other end 11b thereof. Accordingly, the first layer 1A corresponding to the interlayer film 11A has a region being thin in thickness and a region being thick in thickness.

Moreover, the whole interlayer film 11A has a region where the thickness is made to increase. Furthermore, the interlayer film 11A has a region where the thickness is made to increase in a direction from one end 11a side to the other end 11b side and has a portion where the amount of increase in the thickness is increased in the direction from one end 11a side to the other end 11b side in the region where the thickness is made to increase. Moreover, the interlayer film 11A has a region where the sectional shape in the thickness direction is a wedge-like shape and has a portion where the wedge angle θ' is increased in a direction from one end 11a side to the other end 11b side in the region where the sectional shape in the thickness direction is a wedge-like shape. In this connection, the wedge angle θ shown in Fig. 2 is a wedge angle in an overall region where the sectional shape in the thickness direction of the interlayer film 11A is a wedge-like shape.

The interlayer film 11 shown in Fig. 1 has a structure in which the rectangular-shaped first layer 1 is sandwiched between the wedge-shaped second layer 2 and the wedge-shaped third layer 3. In Figs. 3 to 8, the first to sixth modified examples in which the interlayer film is changed in the shape of each layer are shown.

In this connection, any of interlayer films of the first to sixth modified examples has a region where the thickness is made to increase, has a region where the thickness is made to increase in a direction from one end 11a side to the other end 11b side and has a portion where the amount of increase in the thickness is increased in the direction from one end 11a side to the other end 11b side in the region where the thickness is made to increase, and furthermore, has a region where the sectional shape in the thickness direction is a wedge-like shape and has a portion where the wedge angle θ' is increased in a direction from one end 11a side to the other end 11b side in the region where the sectional shape in the thickness direction is a wedge-like shape.

An interlayer film 11B in accordance with the first modified example shown in Fig. 3 is provided with a first layer 1B having a sectional shape in the thickness direction of a wedge-like shape, a second layer 2B having a sectional shape in the thickness direction of a wedge-like shape, and a third layer 3B having a sectional shape in the thickness direction of a wedge-like shape. The first layer 1B is arranged between the second layer 2B and the third layer 3B to be sandwiched therebetween.

The thickness of one end 11a side of each of the first layer 1B, the second layer 2B, and the third layer 3B is thinner than that of the other end 11b side thereof. Accordingly, the interlayer film 11B has a region being thin in thickness and a region being thick in thickness. In this connection, an interlayer film 11B may not have a third layer 3B.

By adopting the second layer 2B and the third layer 3B, the interlayer film 11B is made to have a portion where the amount of increase in the thickness is increased in a direction from one end 11a side to the other end 11b side and have a portion where the wedge angle θ' is increased in the direction from one end 11a side to the other end 11b side.

An interlayer film 11C in accordance with the second modified example shown in Fig. 4 is provided with a first layer 1C having a sectional shape in the thickness direction of a rectangular shape, a second layer 2C having a sectional shape in the thickness direction of a wedge-like shape, and a third layer 3C having a sectional shape in the thickness direction of a rectangular shape. The first layer 1C is arranged between the second layer 2C and the third layer 3C to be sandwiched therebetween. The thickness of one end 11a side of the second layer 2C is thinner than that of the other end 11b side thereof. Accordingly, the interlayer film 11C has a region being thin in thickness and a region being thick in thickness. In this connection, an interlayer film 11C may not have a third layer 3C.

By adopting the second layer 2C, the interlayer film 11C is made to have a portion where the amount of increase in the thickness is increased in a direction from one end 11a side to the other end 11b side and have a portion where the wedge angle θ' is increased in the direction from one end 11a side to the other end 11b side.

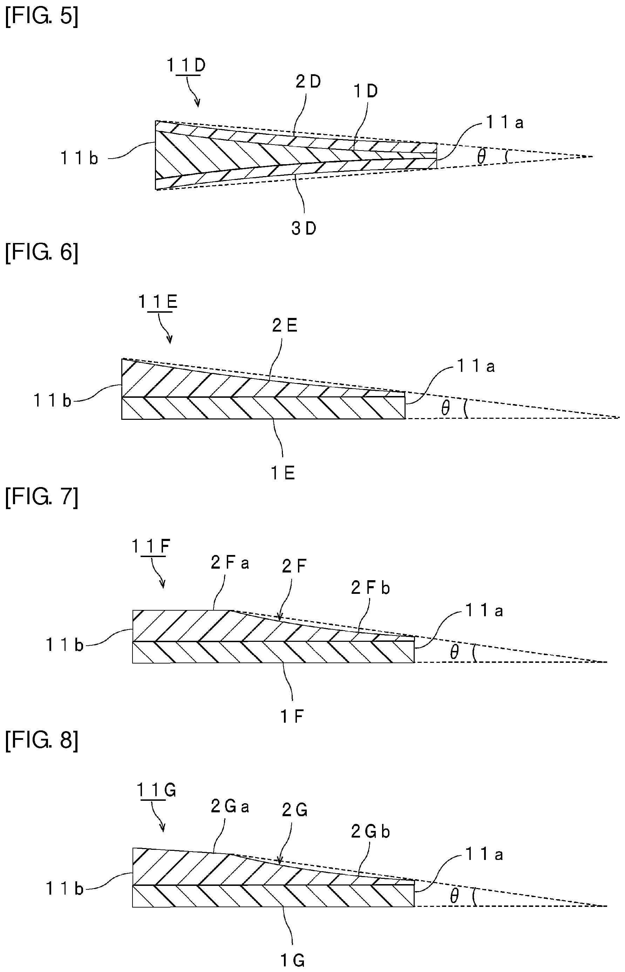

An interlayer film 11D in accordance with the third modified example shown in Fig. 5 is provided with a first layer 1D having a sectional shape in the thickness direction of a wedge-like shape, a second layer 2D having a sectional shape in the thickness direction of a curved rectangle-like shape, and a third layer 3D having a sectional shape in the thickness direction of a curved rectangle-like shape. The whole second layer 2D has a uniform thickness. The whole third layer 3D has a uniform thickness. The first layer 1D is arranged between the second layer 2D and the third layer 3D to be sandwiched therebetween. The thickness of one end 11a side of the first layer 1D is thinner than that of the other end 11b side thereof. Accordingly, the interlayer film 11D has a region being thin in thickness and a region being thick in thickness. In this connection, an interlayer film 11D may not have a third layer 3D.

By adopting the first layer 1D, the interlayer film 11D is made to have a portion where the amount of increase in the thickness is increased in a direction from one end 11a side to the other end 11b side and have a portion where the wedge angle θ' is increased in the direction from one end 11a side to the other end 11b side.

An interlayer film 11E in accordance with the fourth modified example shown in Fig. 6 is provided with a first layer 1E having a sectional shape in the thickness direction of a rectangular shape and a second layer 2E having a sectional shape in the thickness direction of a wedge-like shape. The second layer 2E is arranged on a first surface side of the first layer 1E to be layered thereon. The thickness of one end 11a side of the second layer 2E is thinner than that of the other end 11b side thereof. Accordingly, the interlayer film 11E has a region being thin in thickness and a region being thick in thickness.

By adopting the second layer 2E, the interlayer film 11E is made to have a portion where the amount of increase in the thickness is increased in a direction from one end 11a side to the other end 11b side and have a portion where the wedge angle θ' is increased in the direction from one end 11a side to the other end 11b side.

An interlayer film 11F in accordance with the fifth modified example (not according to the invention) shown in Fig. 7 is provided with a first layer 1F having a sectional shape in the thickness direction of a rectangular shape and a second layer 2F having a region 2Fa with a sectional shape in the thickness direction of a rectangular shape and a region 2Fb with a sectional shape in the thickness direction of a wedge-like shape. The second layer 2F is arranged on a first surface side of the first layer 1F to be layered thereon. The thickness of one end 11a side of the second layer 2F is thinner than that of the other end 11b side thereof. Accordingly, the interlayer film 11F has a region being thin in thickness and a region being thick in thickness.

By adopting the second layer 2F having a region 2Fb with a sectional shape in the thickness direction of a wedge-like shape, the interlayer film 11F is made to have a portion where the amount of increase in the thickness is increased in a direction from one end 11a side to the other end 11b side and have a portion where the wedge angle θ' is increased in the direction from one end 11a side to the other end 11b side. Like an interlayer film portion as the region 2Fa, the interlayer film 11E may have a portion where the amount of increase in the thickness is not increased in a direction from one end 11a side to the other end 11b side, and the sectional shape in the thickness direction of this portion may be a rectangular shape.

An interlayer film 11G in accordance with the sixth modified example (not according to the invention) shown in Fig. 8 is provided with a first layer 1G having a sectional shape in the thickness direction of a rectangular shape and a second layer 2G having a region 2Ga with a sectional shape in the thickness direction of a wedge-like shape and a region 2Gb with a sectional shape in the thickness direction of a wedge-like shape. The second layer 2G is arranged on a first surface side of the first layer 1G to be layered thereon. The thickness of one end 11a side of the second layer 2G is thinner than that of the other end 11b side thereof. Accordingly, the interlayer film 11G has a region being thin in thickness and a region being thick in thickness.

In the region 2Ga with a sectional shape in the thickness direction of a wedge-like shape, the amount of increase in the thickness and the wedge angle θ' are constant in a direction from one end 11a side to the other end 11b side. In the region 2Ga with a sectional shape in the thickness direction of a wedge-like shape, the amount of increase in the thickness is not increased in the direction from one end 11a side to the other end 11b side and the wedge angle θ' is not increased in the direction from one end 11a side to the other end 11b side. In the region 2Gb with a sectional shape in the thickness direction of a wedge-like shape, the amount of increase in the thickness is increased in a direction from one end 11a side to the other end 11b side and the wedge angle θ' is increased in the direction from one end 11a side to the other end 11b side. Like an interlayer film portion as the region 2Ga, the interlayer film 11G may have a portion where the amount of increase in the thickness is not increased in the direction from one end 11a side to the other end 11b side, and the sectional shape in the thickness direction of this portion may be a wedge-like shape.

By adopting the second layer 2G having a region 2Gb with a sectional shape in the thickness direction of a wedge-like shape, the interlayer film 11G is made to have a portion where the amount of increase in the thickness is increased in a direction from one end 11a side to the other end 11b side and have a portion where the wedge angle θ' is increased in the direction from one end 11a side to the other end 11b side.

In this connection, for reference, interlayer films which are not categorized as the interlayer film according to the present invention are shown in Figs. 12, 13.

In Fig. 12, a wedge-shaped interlayer film 101A is shown. In the wedge-shaped interlayer film 101A, the amount of increase in the thickness and the wedge angle θ' are constant in a direction from one end 101a side to the other end 101b side. In the wedge-shaped interlayer film 101, the amount of increase in the thickness is not increased in the direction from one end 101a side to the other end 101b side, and the wedge angle θ' is not increased in the direction from one end 101a side to the other end 101b side.

In Fig. 13, a wedge-shaped interlayer film 101B is shown. In the wedge-shaped interlayer film 101B, the amount of increase in the thickness is decreased in a direction from one end 101a side to the other end 101b side, and the wedge angle θ' is decreased in the direction from one end 101a side to the other end 101b side.

In order to suppress double images, the wedge angle θ of the interlayer film can be appropriately set according to the fitting angle of laminated glass. From the viewpoint of further suppressing double images, the wedge angle θ of the interlayer film is preferably 0.01 mrad (0.0006 degrees) or more, more preferably 0.2 mrad (0.0115 degrees) or more, and preferably 2 mrad (0.1146 degrees) or less, and more preferably 0.7 mrad (0.0401 degrees) or less. The wedge angle θ of an interlayer film is an interior angle formed at the intersection point between a straight line connecting a point on the first surface of the maximum thickness part of the interlayer film and a point on the first surface of the minimum thickness part thereof and a straight line connecting a point on the second surface of the maximum thickness part of the interlayer film and a point on the second surface of the minimum thickness part thereof.

The interlayer film may have a colored band area in a partial region. The interlayer film may have a colored region in a partial region. When a multi-layered interlayer film has a colored band area or a colored region, it is preferred that a surface layer have a colored band area or a colored region. However, an intermediate layer may have a colored band area or a colored region. For example, at the time of extrusion-molding an interlayer film or at the time of extrusion-molding the respective layers of the interlayer film, a prescribed region can be blended with a coloring agent to form the colored band area or the colored region.

The thickness of the interlayer film is not particularly limited. The thickness of the interlayer film refers to the total thickness of the respective layers constituting the interlayer film. Thus, in the case of a multi-layered interlayer film 11, the thickness of the interlayer film 11 refers to the total thickness of the first layer 1, the second layer 2, and the third layer 3.

The maximum thickness of the interlayer film is preferably 0.1 mm or more, more preferably 0.25 mm or more, further preferably 0.5 mm or more, and especially preferably 0.8 mm or more and is preferably 3 mm or less, more preferably 2 mm, and further preferably 1.5 mm or less.

When the distance between one end and the other end is defined as X, it is preferred that the interlayer film have a minimum thickness in a region between a position at a distance of 0X from the one end toward the inside and a position at a distance of 0.2X therefrom (a region ranging from 0X to 0.2X) and have a maximum thickness in a region between a position at a distance of 0X from the other end toward the inside and a position at a distance of 0.2X therefrom (a region ranging from 0X to 0.2X), and it is more preferred that the interlayer film have a minimum thickness in a region between a position at a distance of 0X from the one end toward the inside and a position at a distance of 0.1X therefrom (a region ranging from 0X to 0.1X) and have a maximum thickness in a region between a position at a distance of 0X from the other end toward the inside and a position at a distance of 0.1X therefrom (a region ranging from 0X to 0.1X). It is preferred that one end of the interlayer film have a minimum thickness and the other end of the interlayer film have a maximum thickness. In the interlayer films 11, 11A, 11B, 11C, 11D, 11E, 11F, and 11G, the one end 11a has a minimum thickness and the other end 11b has a maximum thickness.

From the viewpoint of the practical aspect and the viewpoint of sufficiently heightening the adhesive force and the penetration resistance, the maximum thickness of a surface layer is preferably 0.001 mm or more, more preferably 0.2 mm or more, further preferably 0.3 mm or more, and preferably 1 mm or less, and more preferably 0.8 mm or less.

From the viewpoint of the practical aspect and the viewpoint of sufficiently enhancing the penetration resistance, the maximum thickness of a layer (intermediate layer) arranged between two surface layers is preferably 0.001 mm or more, more preferably 0.1 mm or more, further preferably 0.2 mm or more, and preferably 0.8 mm or less, more preferably 0.6 mm or less, and further preferably 0.3 mm or less.

The distance X between one end and the other end of the interlayer film is preferably 3 m or less, more preferably 2 m or less, especially preferably 1.5 m or less, and preferably 0.5 m or more, more preferably 0.8 m or more, and especially preferably 1 m or more.

Hereinafter, the details of the first layer (including a single-layered interlayer film), the second layer, and the third layer which constitute the interlayer film according to the present invention, and the details of each ingredient contained in the first layer, the second layer, and the third layer will be described.

### (Thermoplastic resin)

It is preferred that the interlayer film contain a thermoplastic resin. It is preferred that the first layer contain a thermoplastic resin. It is preferred that the second layer contain a thermoplastic resin. It is preferred that the third layer contain a thermoplastic resin. As the thermoplastic resin, a conventionally known thermoplastic resin can be used. One kind of the thermoplastic resin may be used alone, and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a polyvinyl alcohol resin, and the like. Thermoplastic resins other than these may be used.

It is preferred that the thermoplastic resin be a polyvinyl acetal resin. By using a polyvinyl acetal resin and a plasticizer together, the adhesive force of the interlayer film for laminated glass according to the present invention to a lamination glass member or another interlayer film is further heightened.

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within the range of 70 to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more, and preferably 5000 or less, more preferably 4000 or less and further preferably 3500 or less. When the average polymerization degree is the above lower limit or more, the penetration resistance of laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the interlayer film is sufficiently lowered.

The aldehyde is not particularly limited. In general, an aldehyde with 1 to 10 carbon atoms is suitably used. Examples of the aldehyde with 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. Propionaldehyde, n-butyraldehyde, isobutyraldehyde, n-hexylaldehyde, or n-valeraldehyde is preferred, propionaldehyde, n-butyraldehyde, or isobutyraldehyde is more preferred, and n-butyraldehyde is further preferred. One kind of the aldehyde may be used alone and two or more kinds thereof may be used in combination.

The content of the hydroxyl group (the amount of hydroxyl groups) of the polyvinyl acetal resin is preferably 15% by mole or more, more preferably 18% by mole or more, and preferably 40% by mole or less, and more preferably 35% by mole or less. When the content of the hydroxyl group is the above lower limit or more, the adhesive force of the interlayer film is further heightened. Moreover, when the content of the hydroxyl group is the above upper limit or less, the flexibility of the interlayer film is enhanced and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin is preferably 0.1% by mole or more, more preferably 0.3% by mole or more, further preferably 0.5% by mole or more, and preferably 30% by mole or less, more preferably 25% by mole or less, and further preferably 20% by mole or less. When the acetylation degree is the above lower limit or more, the compatibility between the polyvinyl acetal resin and a plasticizer is heightened. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree of the polyvinyl acetal resin (the butyralization degree in the case of a polyvinyl butyral resin) is preferably 60% by mole or more, more preferably 63% by mole or more, and preferably 85% by mole or less, more preferably 75% by mole or less, and further preferably 70% by mole or less. When the acetalization degree is the above lower limit or more, the compatibility between the polyvinyl acetal resin and a plasticizer is heightened. When the acetalization degree is the above upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

### (Plasticizer)

From the viewpoint of further heightening the adhesive force of an interlayer film, the interlayer film contains a plasticizer. It is preferred that the first layer contain a plasticizer. It is preferred that the second layer contain a plasticizer. It is preferred that the third layer contain a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

### [Chemical 1]

In the foregoing formula (1), R1 and R2 each represent an organic group with 5 to 10 carbon atoms, R3 represents an ethylene group, an isopropylene group, or an n-propylene group, and p represents an integer of 3 to 10. It is preferred that R1 and R2 in the foregoing formula (1) each be an organic group with 6 to 10 carbon atoms.

It is preferred that the plasticizer include triethylene glycol di-2-ethylhexanoate (3GO) or triethylene glycol di-2-ethylbutyrate (3GH) and it is more preferred that the plasticizer include triethylene glycol di-2-ethylhexanoate.

The content of the plasticizer is not particularly limited. In the respective layers, the content of the plasticizer is preferably 25 parts by weight or more, more preferably 30 parts by weight or more, and preferably 60 parts by weight or less, and more preferably 50 parts by weight or less relative to 100 parts by weight of the thermoplastic resin. When the content of the plasticizer is the above lower limit or more, the penetration resistance of laminated glass is further enhanced. When the content of the plasticizer is the above upper limit or less, the transparency of the interlayer film is further enhanced.

### (Ultraviolet ray screening agent)

It is preferred that the interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the interlayer film and the laminated glass are used for a long period of time, the visible light transmittance becomes further difficult to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include a metal-based ultraviolet ray screening agent (an ultraviolet ray screening agent containing a metal), a metal oxide-based ultraviolet ray screening agent (an ultraviolet ray screening agent containing a metal oxide), a benzotriazole-based ultraviolet ray screening agent (an ultraviolet ray screening agent having a benzotriazole structure), a benzophenone-based ultraviolet ray screening agent (an ultraviolet ray screening agent having a benzophenone structure), a triazine-based ultraviolet ray screening agent (an ultraviolet ray screening agent having a triazine structure), a malonic acid ester-based ultraviolet ray screening agent (an ultraviolet ray screening agent having a malonic acid ester structure), an oxanilide-based ultraviolet ray screening agent (an ultraviolet ray screening agent having an oxanilide structure), a benzoate-based ultraviolet ray screening agent (an ultraviolet ray screening agent having a benzoate structure), and the like.

Examples of the metal-based ultraviolet ray screening agent include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably a benzotriazole-based ultraviolet ray screening agent, a benzophenone-based ultraviolet ray screening agent, a triazine-based ultraviolet ray screening agent, or a benzoate-based ultraviolet ray screening agent, more preferably a benzotriazole-based ultraviolet ray screening agent or a benzophenone-based ultraviolet ray screening agent, and further preferably a benzotriazole-based ultraviolet ray screening agent.

Examples of the metal oxide-based ultraviolet ray screening agent include zinc oxide, titanium oxide, cerium oxide, and the like. Furthermore, with regard to the metal oxide-based ultraviolet ray screening agent, the surface thereof may be coated with any material. Examples of the coating material for the surface of the metal oxide-based ultraviolet ray screening agent include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the benzotriazole-based ultraviolet ray screening agent include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be a benzotriazole-based ultraviolet ray screening agent containing a halogen atom, and it is more preferred that the ultraviolet ray screening agent be a benzotriazole-based ultraviolet ray screening agent containing a chlorine atom, because those are excellent in ultraviolet ray absorbing performance.

Examples of the benzophenone-based ultraviolet ray screening agent include octabenzone ("Chimassorb 81" available from BASF Japan Ltd.), and the like.

Examples of the triazine-based ultraviolet ray screening agent include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the malonic acid ester-based ultraviolet ray screening agent include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the malonic acid ester-based ultraviolet ray screening agent include Hostavin B-CAP, Hostavin PR-25, and Hostavin PR-31 (any of these is available from Clariant Japan K.K.).

Examples of the oxanilide-based ultraviolet ray screening agent include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide, and 2-ethyl-2'-ethoxy-oxanilide ("Sanduvor VSU" available from Clariant Japan K.K.).

Examples of the benzoate-based ultraviolet ray screening agent include 2,4-di-tert-butylphenyl-3,5-di-tert-butyl-4-hydroxybenzoate ("Tinuvin 120" available from BASF Japan Ltd.), and the like.

From the viewpoint of effectively enhancing the heat shielding properties, it is preferred that the interlayer film contain tin-doped indium oxide particles. From the viewpoints of effectively enhancing the heat shielding properties and maintaining high heat shielding properties over a long period of time, it is preferred that the interlayer film contain tin-doped indium oxide particles and an ultraviolet ray screening agent, and it is preferred that the interlayer film contain tin-doped indium oxide particles and an ultraviolet ray screening agent having a benzotriazole structure. The interlayer film does not need to be an interlayer film containing tungsten oxide particles and an ultraviolet ray screening agent having a benzotriazole structure.

From the viewpoint of further suppressing the lowering in visible light transmittance after the lapse of a certain period of time, in 100% by weight of a layer containing the ultraviolet ray screening agent (a first layer, a second layer, or a third layer), the content of the ultraviolet ray screening agent is preferably 0.1% by weight or more, more preferably 0.2% by weight or more, further preferably 0.3% by weight or more, and especially preferably 0.5% by weight or more and is preferably 2.5% by weight or less, more preferably 2% by weight or less, further preferably 1% by weight or less, and especially preferably 0.8% by weight or less. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after the lapse of a certain period of time can be significantly suppressed.

### (Oxidation inhibitor)

It is preferred that the interlayer film include an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3' ,5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol) butyric acid glycol ester, bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, tris(2,4-di-t-butylphenyl) phosphite, 2,2'-methylenebis(4,6-di-t-butyl-1-phenyloxy) (2-ethylhexyloxy)phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "IRGANOX 1010" available from BASF Japan Ltd., and the like.

With regard to the interlayer film and laminated glass, in order to maintain high visible light transmittance thereof over a long period of time, it is preferred that the content of the oxidation inhibitor be 0.1% by weight or more in 100% by weight of the interlayer film or in 100% by weight of the layer containing the oxidation inhibitor (a first layer, a second layer or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

### (Other ingredients)

Each of the first layer, the second layer, and the third layer may contain additives such as an adhesive force regulating agent, a heat shielding compound including heat shielding particles, a flame retardant, an antistatic agent, a pigment, a dye, a moisture-resistance improving agent, a fluorescent brightening agent, and an infrared ray absorber, as necessary. One kind of these additives may be used alone, and two or more kinds thereof may be used in combination.

From the viewpoint of making the difference in visible light transmittance between the one end and the other end small, it is preferred that the interlayer film contain no tungsten oxide particles or contain tungsten oxide particles in a content of less than 0.005% by weight, it is more preferred that the interlayer film contain no tungsten oxide particles or contain tungsten oxide particles in a content of 0.003% by weight or less, and it is preferred that the interlayer film contain no tungsten oxide particles.

### (Laminated glass)

Fig. 9 is a sectional view showing an example of laminated glass prepared with the interlayer film for laminated glass shown in Fig. 1.

The laminated glass 21 shown in Fig. 9 is provided with an interlayer film 11, a first lamination glass member 22, and a second lamination glass member 23. The interlayer film 11 is arranged between the first lamination glass member 22 and the second lamination glass member 23 to be sandwiched therebetween. The first lamination glass member 22 is arranged on a first surface of the interlayer film 11. The second lamination glass member 23 is arranged on a second surface opposite to the first surface of the interlayer film 11.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first lamination glass member and the second lamination glass member be a glass plate or a PET film and at least one among the first lamination glass member and the second lamination glass member be a glass plate. It is especially preferred that both of the first lamination glass member and the second lamination glass member be glass plates.

Examples of the glass plate include a sheet of inorganic glass and a sheet of organic glass. Examples of the inorganic glass include float plate glass, heat rayabsorbing plate glass, heat ray-reflecting plate glass, polished plate glass, figured glass, wired plate glass, green glass, and the like. The organic glass is synthetic resin glass substituted for inorganic glass. Examples of the sheet of organic glass include a polycarbonate plate, a poly(meth)acrylic resin plate, and the like. Examples of the poly(meth)acrylic resin plate include a polymethyl (meth)acrylate plate, and the like.

Although respective thicknesses of the first lamination glass member and the second lamination glass member are not particularly limited, the thickness is preferably 1 mm or more and preferably 5 mm or less. When the lamination glass member is a glass plate, the thickness of the glass plate is preferably 1 mm or more and preferably 5 mm or less. When the lamination glass member is a PET film, the thickness of the PET film is preferably 0.03 mm or more and preferably 0.5 mm or less.

When the interlayer film of the present invention having a specific shape is adopted, it is preferred that the interlayer film be arranged between first and second lamination glass members having a flat plate-like shape or between first and second lamination glass members having a curvature radius of 15000 mm or less, and it is more preferred that the interlayer film be arranged between first and second lamination glass members having a flat plate-like shape, because laminated glass satisfactory in appearance is easily obtained and double images are effectively suppressed. In this context, the interlayer film may be arranged between first and second lamination glass members having a curvature radius of more than 15000 mm. From the viewpoints of further improving the appearance of laminated glass and further effectively suppressing double images, the curvature radius of each of the first and second lamination glass members is preferably 18000 mm or less and more preferably 15000 mm or less.

The method for producing the laminated glass is not particularly limited. For example, the interlayer film is sandwiched between the first and second lamination glass members, and then, passed through pressure rolls or subjected to decompression suction in a rubber bag. Therefore, the air remaining between the first lamination glass member and the interlayer film and between the second lamination glass member and the interlayer film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

The laminated glass can be used for automobiles, railway vehicles, aircraft, ships, buildings, and the like. It is preferred that the laminated glass be laminated glass for building or for vehicles and it is more preferred that the laminated glass be laminated glass for vehicles. The laminated glass can also be used for applications other than these applications. The laminated glass can be used for a windshield, side glass, rear glass, or roof glass of an automobile, and the like. Since the laminated glass is high in heat shielding properties and is high in visible light transmittance, the laminated glass is suitably used for automobiles.

Since laminated glass prepared with the interlayer film enables double images to be suppressed, the laminated glass can be suitably used for a windshield of an automobile. It is preferred that the interlayer film be used for laminated glass serving as a head-up display (HUD). It is preferred that the laminated glass serve as a head-up display (HUD).

In the laminated glass, measured information such as the speed which is sent from a control unit and the like can be projected onto the windshield from a display unit of the instrumental panel. As such, without making a driver of an automobile move his or her visual field downward, a front visual field and measured information can be visually recognized simultaneously.

Hereinafter, the present invention will be described in more detail with reference to examples.

The following materials were used in examples and comparative examples.

### Thermoplastic resin:

PVB1 (a polyvinyl butyral resin acetalized with n-butyraldehyde, the average polymerization degree of 1700, the content of the hydroxyl group of 30.8% by mole, the acetylation degree of 0.7% by mole, the butyralization degree of 68.5% by mole)

In this connection, the content of the hydroxyl group, the acetylation degree, and the butyralization degree (the acetalization degree) of the polyvinyl butyral were measured by a method in accordance with ASTM D1396-92. In this connection, even in the cases of being measured according to JIS K6728 "Testing methods for polyvinyl butyral", numerical values similar to those obtained by a method in accordance with ASTM D1396-92 were exhibited.
Plasticizer:
   3GO (triethylene glycol di-2-ethylhexanoate)
Ultraviolet ray screening agent:
   Tinuvin 326 (2-(2'-hydroxy-3'-t-butyl-5-methylphenyl)-5-chlorobenzotriazole, "Tinuvin 326" available from BASF Japan Ltd.)
Oxidation inhibitor:
   BHT (2,6-di-t-butyl-p-cresol)

### (Example 1)

Preparation of Composition 1 for forming first layer:

To 100 parts by weight of a polyvinyl butyral resin (PVB1), 40 parts by weight of triethylene glycol di-2-ethylhexanoate (3GO), tungsten oxide particles (CW) in an amount that the proportion thereof in the resulting first layer becomes 0.18% by weight, Tinuvin 326 in an amount that the proportion thereof in the resulting first layer becomes 0.6% by weight, and BHT in an amount that the proportion thereof in the resulting first layer becomes 0.3% by weight were added and thoroughly kneaded with a mixing roll to obtain a Composition 1 for forming an interlayer film.

### Preparation of Composition 2 for forming second layer:

To 100 parts by weight of a polyvinyl butyral resin (PVB1), 40 parts by weight of triethylene glycol di-2-ethylhexanoate (3GO), Tinuvin 326 in an amount that the proportion thereof in the resulting first layer becomes 0.6% by weight, and BHT in an amount that the proportion thereof in the resulting first layer becomes 0.3% by weight were added and thoroughly kneaded with a mixing roll to obtain a Composition 2 for forming a second layer.

### Preparation of interlayer film:

A first layer and a second layer obtained by respectively extruding the obtained Composition 1 and Composition 2 with an extruder were stacked and subjected to hot pressing to prepare an interlayer film in which the first layer having a sectional shape in the thickness direction of a rectangular shape and the second layer having a sectional shape in the thickness direction of a wedge-like shape are layered.

In the interlayer film obtained, the thickness of one end in the longitudinal direction was made thinner than the thickness of the other end at the opposite side of the one end, the thickness in the transversal direction was made uniform, and the amounts of increase in the thickness in a direction from one end side to the other end side of the interlayer film were set to those listed in the following Table 1. The sectional shape in the thickness direction of the interlayer film obtained was determined to be a wedge-like shape, and the interlayer film was determined to have a shape in which the thickness is gradually thickened from one end toward the other end. The interlayer film was determined to have a minimum thickness at one end and have a maximum thickness at the other end.

### Preparation of laminated glass:

The interlayer film obtained was cut into a size of 1000 mm in longitudinal length × 300 mm in transversal length so that respective middle portions in the longitudinal direction and the transversal direction are included. Next, the interlayer film was sandwiched between two sheets of transparent float glass (1000 mm in longitudinal length × 300 mm in transversal length × 2.5 mm in thickness) to obtain a laminate. The laminate was put into a rubber bag and the inside thereof was degassed for 20 minutes at a degree of vacuum of 2.6 kPa, after which the laminate was transferred into an oven while being degassed, and furthermore, held in place for 30 minutes at 90°C and pressed under vacuum to subject the laminate to preliminary press-bonding. The preliminarily press-bonded laminate was subjected to press-bonding for 20 minutes under conditions of 135°C and a pressure of 1.2 MPa in an autoclave to obtain a sheet of laminated glass.

### (Comparative Examples 1, 2)

A sheet of laminated glass was obtained in the same manner as that in Example 1 except that the shape of an interlayer film was set to that shown in the following Table 1.

### (Evaluation)

### (1) Double images

A sheet of laminated glass was installed at a position of the windshield. The information to be displayed, which is emitted from a display unit installed below the sheet of laminated glass, was reflected in the sheet of laminated glass to visually confirm the presence or absence of double images at a prescribed position. When a distance between one end and the other end of the interlayer film was defined as X, a first position at a distance of 0.15X from the one end of the interlayer film was defined as the lower end of an HUD display area and a second position at a distance of 0.85X from the one end of the interlayer film was defined as the upper end of the HUD display area. At the first position being the lower end and the second position being the upper end, the presence or absence of double images was visually confirmed. The double images were judged according to the following criteria.

### [Criteria for judgment in double images]

O: Double images are not confirmed.
Δ: Double images are confirmed slightly (and are at a level causing no problem in practical use).
×: Double images are confirmed.

The results are shown in the following Table 1.

**[Table 1]**

| | | Example 1 | Comparative Example 1 | Comparative Example 2 |
|---|---|---|---|---|
| First layer | Sectional shape in thickness direction | Rectangular shape | Rectangular shape | Rectangular shape |
| | Thickness of one end (µm) | 100 | 100 | 100 |
| | Thickness of the other end (µm) | 100 | 100 | 100 |
| Second layer | Sectional shape in thickness direction | Wedge-like shape | Wedge-like shape | Wedge-like shape |
| | Thickness of one end (µm) | 661 | 661 | 675.0 |
| | Thickness of the other end (µm) | 1359.0 | 1349.5 | 1373.0 |
| Interlayer film | Sectional shape in thickness direction | Wedge-like shape | Wedge-like shape | Wedge-like shape |
| | Thickness of one end (µm) | 761 | 761 | 775 |
| | Amount of increase in thickness in region between positions 0X and 0.1X from one end (amount of increase in thickness within distance range of 0.1X) (µm) | 67.5 | 76.5 | 102.5 |
| | Amount of increase in thickness in region between positions 0.1X and 0.2X from one end (amount of increase in thickness within distance range of 0.1X) (µm) | 69 | 76.5 | 85.5 |
| | Amount of increase in thickness in region between positions 0.2X and 0.3X from one end (amount of increase in thickness within distance range of 0.1X) (µm) | 70.5 | 76.5 | 81 |
| | Amount of increase in thickness in region between positions 0.3X and 0.4X from one end (amount of increase in thickness within distance range of 0.1X) (µm) | 72 | 76.5 | 76.5 |
| | Amount of increase in thickness in region between positions 0.4X and 0.5X from one end (amount of increase in thickness within distance range of 0.1X) (µm) | 73.5 | 76.5 | 73.5 |
| | Amount of increase in thickness in region between positions 0.5X and 0.6X from one end (amount of increase in thickness within distance range of 0.1X) (µm) | 76.5 | 76.5 | 72 |
| | Amount of increase in thickness in region between positions 0.6X and 0.7X from one end (amount of increase in thickness within distance range of 0.1X) (µm) | 81 | 76.5 | 70.5 |
| | Amount of increase in thickness in region between positions 0.8X and 0.9X from one end (amount of increase in thickness within distance range of 0.1X) (µm) | 85.5 | 76.5 | 69 |
| | Amount of increase in thickness in region between positions 0.9X and 1.0X from one end (amount of increase in thickness within distance range of 0.1X) (µm) | 102.5 | 76.5 | 67.5 |
| | Thickness of the other end (µm) | 1459.0 | 1449.5 | 1473 |
| Evaluation | Double images at first position being lower end | ○ | × | × |
| | Double images at second position being upper end | ○ | × | × |

In Example 1, it has become apparent that the overall area between the first position at a distance of 0.15X from the one end of the interlayer film and the second position at a distance of 0.85X from the one end of the interlayer film is also suppressed in double images.

In this connection, Example 1 was shown as a specific example in which an interlayer film shown in Fig. 6 was prepared. Even when interlayer films shown in Figs. 1 to 5, 7, and 8 are prepared, by providing these interlayer films with the configuration of the present invention, double images can be effectively suppressed.

### EXPLANATION OF SYMBOLS

1, 1A, 1B, 1C, 1D, 1E, 1F, 1G: First layer
2, 2B, 2C, 2D, 2E, 2F, 2G: Second layer
2Fa: Region having sectional shape in thickness direction of rectangular shape
2Fb: Region having sectional shape in thickness direction of wedge-like shape
2Ga: Region having sectional shape in thickness direction of wedge-like shape
2Gb: Region having sectional shape in thickness direction of wedge-like shape
3, 3B, 3C, 3D: Third layer
11, 11A, 11B, 11C, 11D, 11E, 11F, 11G: Interlayer film
11a: One end
11b: The other end
21: Laminated glass
22: First lamination glass member
23: Second lamination glass member

## Claims

1. An interlayer film for laminated glass, comprising a thermoplastic resin and a plasticizer, having one end and the other end thicker in thickness than the one end and satisfying (1) and (2) below:
(1) the interlayer film has a region where the thickness is made to increase in a direction from one end side to the other end side and has a portion where the amount of increase in the thickness is increased in the direction from one end side to the other end side in the region where the thickness is made to increase,
the interlayer film further has a portion where, when a distance between the one end and the other end of the interlayer film is defined as X, the amount of increase in the thickness in an overall first region extending over a distance range of 0.1X where the thickness is made to increase is larger than the amount of increase in the thickness in an overall second region extending over a distance range of 0.1X, being located closer to the one end side than the first region and connected to the first region, where the thickness is made to increase,
in the whole interlayer film, the amount of increase in the thickness is increased in the direction from one end side to the other end side,
the interlayer film further has a portion where, when a distance between the one end and the other end of the interlayer film is defined as X, the amount of increase in the thickness in an overall third region extending over a distance range of 0.1X where the thickness is made to increase is larger than the amount of increase in the thickness in the overall first region extending over a distance range of 0.1X, being located closer to the one end side than the third region and connected to the third region, where the thickness is made to increase,
wherein the second region, the first region and the third region are connected in this order in the direction from one end side to the other end side, and
wherein the absolute value of a difference between the ratio of the amount of increase in the thickness in the overall first region to the amount of increase in the thickness in the overall second region and the ratio of the amount of increase in the thickness in the overall third region to the amount of increase in the thickness in the overall first region is 0.2 or less;
(2) the interlayer film has a region where the sectional shape in the thickness direction is a wedge-like shape and has a portion where the wedge angle is increased in a direction from one end side to the other end side in the region where the sectional shape in the thickness direction is a wedge-like shape,
in the whole interlayer film, the wedge angle is increased in the direction from one end side to the other end side
the interlayer film further has a portion where, when a distance between the one end and the other end of the interlayer film is defined as X, the wedge angle in an overall first region extending over a distance range of 0.1X where the thickness is made to increase is larger than the wedge angle in an overall second region extending over a distance range of 0.1X, being located closer to the one end side than the first region and connected to the first region, where the thickness is made to increase,
the interlayer film further has a portion where, when a distance between the one end and the other end of the interlayer film is defined as X, the wedge angle in an overall third region extending over a distance range of 0.1X where the thickness is made to increase is larger than the wedge angle in the overall first region extending over a distance range of 0.1X, being located closer to the one end side than the third region and connected to the third region, where the thickness is made to increase,
wherein the second region, the first and the third region are connected in this order in the direction from one end side to the other end side, and
wherein the absolute value of a difference between the ratio of the wedge angle in the overall first region to the wedge angle in the overall second region and the ratio of the wedge angle in the overall third region to the wedge angle in the overall first region is 0.2 or less.

2. The interlayer film for laminated glass according to claim 1, wherein a ratio of the amount of increase in the thickness in the overall first region to the amount of increase in the thickness in the overall second region is 1.02 or more and is 1.25 or less.

3. The interlayer film for laminated glass according to claim 1, wherein a ratio of the wedge angle in the overall first region to the wedge angle in the overall second region is 1.02 or more and is 1.25 or less.

4. The interlayer film for laminated glass according to any one of claims 1 to 3, wherein the thermoplastic resin is a polyvinyl acetal resin.

5. The interlayer film for laminated glass according to any one of claims 1 to 4, further comprising: a first layer; and
a second layer arranged on a first surface side of the first layer.

6. The interlayer film for laminated glass according to claim 5, further comprising: a third layer arranged on a second surface side opposite to the first surface side of the first layer.

7. A laminated glass, comprising:
a first lamination glass member;
a second lamination glass member; and
the interlayer film for laminated glass according to any one of claims 1 to 6,
the interlayer film for laminated glass being arranged between the first lamination glass member and the second lamination glass member.

8. The laminated glass according to claim 7, wherein the first and second lamination glass members have a flat plate-like shape or wherein the first and second lamination glass members have a curvature radius of 15000 mm or less.

## Patentansprüche

1. Zwischenschichtfolie für Verbundglas, umfassend ein thermoplastisches Harz und einen Weichmacher,
mit einem Ende und einem anderen Ende, das dicker ist als das eine Ende, und die die folgenden Bedingungen (1) und (2) erfüllt:
(1) die Zwischenschichtfolie weist einen Bereich auf, in dem die Dicke in Richtung von einer Endseite zur anderen Endseite zunimmt, und weist einen Abschnitt auf,
in dem die Zunahme der Dicke in Richtung von einer Endseite zur anderen Endseite in dem Bereich, in dem die Dicke zunimmt, zunimmt,
die Zwischenschichtfolie weist ferner einen Abschnitt auf, in dem, wenn der Abstand zwischen dem einen Ende und dem anderen Ende der Zwischenschichtfolie als X definiert ist, die Zunahme der Dicke in einem gesamten ersten Bereich, der sich über einen Abstandsbereich von 0,1X erstreckt, in dem die Dicke zunimmt, größer ist als die Zunahme der Dicke in einem gesamten zweiten Bereich, der sich über einen Abstandsbereich von 0,1X erstreckt, der näher an der einen Endseite liegt als der erste Bereich und mit dem ersten Bereich verbunden ist, in dem die Dicke zunimmt,
in der gesamten Zwischenschichtfolie nimmt die Zunahme der Dicke in Richtung von einer Endseite zur anderen Endseite zu,
die Zwischenschichtfolie weist ferner einen Abschnitt auf, in dem, wenn der Abstand zwischen dem einen Ende und dem anderen Ende der Zwischenschichtfolie als X definiert ist, die Zunahme der Dicke in einem gesamten dritten Bereich, der sich über einen Abstandsbereich von 0,1X erstreckt, in dem die Dicke zunimmt, größer ist als die Zunahme der Dicke im gesamten ersten Bereich, der sich über einen Abstandsbereich von 0,1X erstreckt, der näher an der einen Endseite liegt als der dritte Bereich und mit dem dritten Bereich verbunden ist, in dem die Dicke zunimmt,
wobei der zweite Bereich, der erste Bereich und der dritte Bereich in dieser Reihenfolge in Richtung von einer Endseite zur anderen Endseite verbunden sind, und
wobei der Absolutwert der Differenz zwischen dem Verhältnis der Zunahme der Dicke im gesamten ersten Bereich zur Zunahme der Dicke im gesamten zweiten Bereich und dem Verhältnis der Zunahme der Dicke im gesamten dritten Bereich zur Zunahme der Dicke im gesamten ersten Bereich 0,2 oder weniger beträgt;
(2) die Zwischenschichtfolie weist einen Bereich auf, in dem die Querschnittsform in der Dickenrichtung keilförmig ist, und weist einen Abschnitt auf, in dem der Keilwinkel in einer Richtung von einer Endseite zur anderen Endseite in dem Bereich, in dem die Querschnittsform in der Dickenrichtung keilförmig ist, zunimmt,
in der gesamten Zwischenschichtfolie nimmt der Keilwinkel in Richtung von einer Endseite zur anderen Endseite zu,
die Zwischenschichtfolie weist ferner einen Abschnitt auf, in dem, wenn der Abstand zwischen dem einen Ende und dem anderen Ende der Zwischenschichtfolie als X definiert ist, der Keilwinkel in einem gesamten ersten Bereich, der sich über einen Abstandsbereich von 0,1X erstreckt, in dem die Dicke zunimmt, größer ist als der Keilwinkel in einem gesamten zweiten Bereich, der sich über einen Abstandsbereich von 0,1X erstreckt, der näher an der einen Endseite liegt als der erste Bereich und mit dem ersten Bereich verbunden ist, in dem die Dicke zunimmt,
die Zwischenschichtfolie weist ferner einen Abschnitt auf, in dem, wenn der Abstand zwischen dem einen Ende und dem anderen Ende der Zwischenschichtfolie als X definiert ist, der Keilwinkel in einem gesamten dritten Bereich, der sich über einen Abstandsbereich von 0,1X erstreckt, in dem die Dicke zunimmt, größer ist als der Keilwinkel in dem gesamten ersten Bereich, der sich über einen Abstandsbereich von 0,1X erstreckt, der näher an der einen Endseite liegt als der dritte Bereich und mit dem dritten Bereich verbunden ist, in dem die Dicke zunimmt,
wobei der zweite Bereich, der erste und der dritte Bereich in dieser Reihenfolge in Richtung von einer Endseite zur anderen Endseite verbunden sind, und
wobei der Absolutwert der Differenz zwischen dem Verhältnis des Keilwinkels im gesamten ersten Bereich zum Keilwinkel im gesamten zweiten Bereich und dem Verhältnis des Keilwinkels im gesamten dritten Bereich zum Keilwinkel im gesamten ersten Bereich 0,2 oder weniger beträgt.

2. Zwischenschichtfolie für Verbundglas gemäß Anspruch 1, wobei das Verhältnis der Zunahme der Dicke im gesamten ersten Bereich zur Zunahme der Dicke im gesamten zweiten Bereich 1,02 oder mehr und 1,25 oder weniger beträgt.

3. Zwischenschichtfolie für Verbundglas gemäß Anspruch 1, wobei das Verhältnis des Keilwinkels im gesamten ersten Bereich zum Keilwinkel im gesamten zweiten Bereich 1,02 oder mehr und 1,25 oder weniger beträgt.

4. Zwischenschichtfolie für Verbundglas gemäß einem der Ansprüche 1 bis 3, wobei das thermoplastische Harz ein Polyvinylacetalharz ist.

5. Zwischenschichtfolie für Verbundglas gemäß einem der Ansprüche 1 bis 4, ferner umfassend: eine erste Schicht; und
eine zweite Schicht, die auf einer ersten Oberflächenseite der ersten Schicht angeordnet ist.

6. Zwischenschichtfolie für Verbundglas gemäß Anspruch 5, ferner umfassend: eine dritte Schicht, die auf einer zweiten Oberflächenseite gegenüber der ersten Oberflächenseite der ersten Schicht angeordnet ist.

7. Verbundglas, umfassend:
ein erstes Verbundglaselement;
ein zweites Verbundglaselement; und
die Zwischenschichtfolie für Verbundglas gemäß einem der Ansprüche 1 bis 6,
wobei die Zwischenschichtfolie für Verbundglas zwischen dem ersten Verbundglaselement und dem zweiten Verbundglaselement angeordnet ist.

8. Verbundglas gemäß Anspruch 7, wobei das erste und das zweite Verbundglaselement eine flache plattenartige Form aufweisen oder wobei das erste und das zweite Verbundglaselement einen Krümmungsradius von 15000 mm oder weniger aufweisen.

## Revendications

1. Film intercouche pour verre feuilleté, comportant une résine thermoplastique et un plastifiant,
ayant une première extrémité et la seconde extrémité plus épaisse en épaisseur que la première extrémité et satisfaisant aux conditions (1) et (2) ci-dessous :
(1) le film intercouche a une zone où l'épaisseur est amenée à augmenter dans une direction allant du côté de la première extrémité jusqu'au côté de la seconde extrémité et a une partie où la grandeur d'augmentation de l'épaisseur est augmentée dans la direction allant du côté de la première extrémité jusqu'au côté de la seconde extrémité dans la zone où l'épaisseur est amenée à augmenter,
le film intercouche a en outre une partie où, lorsqu'une distance entre la première extrémité et la seconde extrémité du film intercouche est définie comme étant X, la grandeur d'augmentation de l'épaisseur dans une première zone globale s'étendant sur une étendue de distance de 0,1X où l'épaisseur est amenée à augmenter est supérieure à la grandeur d'augmentation de l'épaisseur dans une deuxième zone globale s'étendant sur une étendue de distance de 0,1X, étant située plus près du côté de la première extrémité que la première zone et reliée à la première zone, où l'épaisseur est amenée à augmenter,
dans le film intercouche complet, la grandeur d'augmentation de l'épaisseur est augmentée dans la direction allant du côté de la première extrémité jusqu'au côté de la seconde extrémité,
le film intercouche a en outre une partie où, lorsqu'une distance entre la première extrémité et la seconde extrémité du film intercouche est définie comme étant X, la grandeur d'augmentation de l'épaisseur dans une troisième zone globale s'étendant sur une étendue de distance de 0,1X où l'épaisseur est amenée à augmenter est supérieure à la grandeur d'augmentation de l'épaisseur dans la première zone globale s'étendant sur une étendue de distance de 0,1X, étant située plus près du côté de la première extrémité que la troisième zone et reliée à la troisième zone, où l'épaisseur est amenée à augmenter,
dans lequel la deuxième zone, la première zone et la troisième zone sont reliées dans cet ordre dans la direction allant du côté de la première extrémité jusqu'au côté de la seconde extrémité, et
dans lequel la valeur absolue d'une différence entre le rapport de la grandeur d'augmentation de l'épaisseur dans la première zone globale sur la grandeur d'augmentation de l'épaisseur dans la deuxième zone globale, et le rapport de la grandeur d'augmentation de l'épaisseur dans la troisième zone globale sur la grandeur d'augmentation de l'épaisseur dans la première zone globale est de 0,2 ou moins ;
(2) le film intercouche a une zone où la forme de section dans la direction d'épaisseur est une forme analogue à un coin et a une partie où l'angle de coin est augmenté dans une direction allant du côté de la première extrémité jusqu'au côté de la seconde extrémité dans la zone où la forme de section dans la direction d'épaisseur est une forme analogue à un coin,
dans le film intercouche complet, l'angle de coin est augmenté dans la direction allant du côté de la première extrémité jusqu'au côté de la seconde extrémité,
le film intercouche a en outre une partie où, lorsqu'une distance entre la première extrémité et la seconde extrémité du film intercouche est définie comme étant X, l'angle de coin dans une première zone globale s'étendant sur une étendue de distance de 0,1X où l'épaisseur est amenée à augmenter est supérieur à l'angle de coin dans une deuxième zone globale s'étendant sur une étendue de distance de 0,1X, étant situé plus près du côté de la première extrémité que la première zone et relié à la première zone, où l'épaisseur est amenée à augmenter,
le film intercouche a en outre une partie où, lorsqu'une distance entre la première extrémité et la seconde extrémité du film intercouche est définie comme étant X, l'angle de coin dans une troisième zone globale s'étendant sur une étendue de distance de 0,1X où l'épaisseur est amenée à augmenter est supérieure à l'angle de coin dans la première zone globale s'étendant sur une étendue de distance de 0,1X, étant situé plus près du côté de la première extrémité que la troisième zone et relié à la troisième zone, où l'épaisseur est amenée à augmenter,
dans lequel la deuxième zone, la première et la troisième zone sont reliées dans cet ordre dans la direction allant du côté de la première extrémité jusqu'au côté de la seconde extrémité, et
dans lequel la valeur absolue d'une différence entre le rapport de l'angle de coin dans la première zone globale sur l'angle de coin dans la deuxième zone globale, et le rapport de l'angle de coin dans la troisième zone globale sur l'angle de coin dans la première zone globale est de 0,2 ou moins.

2. Film intercouche pour verre feuilleté selon la revendication 1, dans lequel un rapport de la grandeur d'augmentation de l'épaisseur dans la première zone globale sur la grandeur d'augmentation de l'épaisseur dans la deuxième zone globale est de 1,02 ou plus et est de 1,25 ou moins.

3. Film intercouche pour verre feuilleté selon la revendication 1, dans lequel un rapport de l'angle de coin dans la première zone globale sur l'angle de coin dans la deuxième zone globale est de 1,02 ou plus et est de 1,25 ou moins.

4. Film intercouche pour verre feuilleté selon l'une quelconque des revendications 1 à 3, dans lequel la résine thermoplastique est une résine de polyacétal de vinyle.

5. Film intercouche pour verre feuilleté selon l'une quelconque des revendications 1 à 4, comportant en outre : une première couche ; et
une deuxième couche disposée sur un premier côté de surface de la première couche.

6. Film intercouche pour verre feuilleté selon la revendication 5, comprenant en outre : une troisième couche disposée sur un second côté de surface opposé au premier côté de surface de la première couche.

7. Verre feuilleté, comportant :
un premier élément de verre de feuilletage ;
un second élément de verre de feuilletage ; et
le film intercouche pour verre feuilleté selon l'une quelconque des revendications 1 à 6,
le film intercouche pour verre feuilleté étant disposé entre le premier élément de verre de feuilletage et le second élément de verre de feuilletage.

8. Verre feuilleté selon la revendication 7, dans lequel les premier et second éléments de verre de feuilletage ont une forme analogue à une plaque plate ou dans lequel les premier et second éléments de verre de feuilletage ont un rayon de courbure de 15 000 mm ou moins.
